# EUROPEAN PATENT SPECIFICATION

(11) **EP 4 540 794 B1**
(45) Date of publication and mention of the grant of the patent: **06.08.2025**
(21) Application number: 23732420.7
(22) Date of filing: 06.06.2023
(51) Int. Cl.: G06V 20/68, G06T 7/00, A23L 5/10

(54) **COOKED LEVEL DETERMINATION**
GARSTUFENBESTIMMUNG
DÉTERMINATION DU NIVEAU DE CUISSON

(30) Priority: 16.06.2022 WO PCT/CN2022/099273; 08.08.2022 EP 22189186
(43) Date of publication of application: 23.04.2025
(73) Proprietor: Versuni Holding B.V., 5656 AE Eindhoven (NL)
(72) Inventor: TAN, Jingwei, 5656 AE Eindhoven (NL)
(74) Representative: Vollering, Stefanus Franciscus Maria
(86) International application number: PCT/EP2023/065136
(87) International publication number: WO 2023/242002

(56) References cited:
- US-A1- 2019 053 332
- US-A1- 2022 007 689
- US-A1- 2022 015 572
- ANONYMOUS: "Fundamental concepts | ARCore | Google for Developers", 1 February 2022 (2022-02-01), XP093050933, Retrieved from the Internet <URL:https://developers.google.com/ar/develop/fundamentals#environmental_understanding> [retrieved on 20230531]

## Description

### TECHNICAL FIELD OF THE INVENTION

The invention relates to a cooking method, a non-transitory machine-readable medium and a cooking apparatus for determining a cooked level of a food item.

### BACKGROUND OF THE INVENTION

Food such as meat is normally cooked according to certain criteria for safety (e.g., to kill harmful bacteria) and taste purposes (e.g., to make food such as meat tender and juicy). In order to meet such criteria, food may be cooked such that the core temperature and weight loss of the food indicates a certain cooked level or doneness of the food. The cooked level may refer to whether the food is raw, undercooked, cooked (where the food has a desired tenderness, juiciness and/or coloring (e.g., browned) level) or overcooked (where the food is tough, dry and/or too brown/burnt). It may be possible to establish the cooked level of the food based on the core temperature and/or weight loss of the food as a result of the cooking process. In the case of meat, the core temperature of the meat increases while the weight of the meat decreases (due to liquid leach-out) during the cooking process. Meat typically needs to be cooked to reach a specified core temperature for safe consumption. By way of example, chicken may need to be cooked such that its core temperature is in the range 73.8-93.2 °C and salmon or whole fish may need to be cooked such that its core temperature is in the range 65-85 °C. However, certain meats such as steak may be relatively safer than other meats to cook to a lower core temperature. Steak may need to be cooked such that its core temperature is in the range 68-80 °C. By way of example, the weight loss associated with cooking meat may be in the range of 15-25 %.

Thus, a measurement of core temperature and/or weight loss during the cooking process may be used to determine the cooked level of food. For example, a temperature probe may be inserted into the core of the food during the cooking process to measure the core temperature. In another example, the weight of the food may be measured during the cooking process using a scale.

The use of a temperature probe is relatively straightforward and allows a user to determine whether or not the food is cooked sufficiently to be safe for consumption. However, a temperature probe does not indicate other parameters of interest such as juiciness, tenderness, etc.

The use of a scale is not straightforward because weight change of food such as meat is mainly due to water, fat and other liquid components leaching out of the meat onto the cooking surface. A separation mechanism is needed to avoid the leach-out liquid contributing to the measured weight of the meat. Use of such a separation mechanism adds complexity and sometimes the leach-out liquid is desirable for the user since it adds a flavor element to the food item.

Cooking apparatus such as an oven, air fryer, etc., may provide a preset recipe as a reference for a suggested cooking time and heating temperature for the food. However, various factors may influence the accuracy of the recipe, such as room temperature, the accuracy of the cooking temperature, initial food temperature, thickness of food, amount of food, etc. Therefore, a user may not be able to create a consistent result by following a preset recipe.

US 2022/007689 A1 relates to the use of image processing techniques to monitor a cooking process.

### SUMMARY OF THE INVENTION

Certain aspects or embodiments described herein relate to determining a cooked level of a food item. Certain aspects or embodiments may reduce or obviate certain problems such as described herein.

In a first aspect, a cooking method is described. The cooking method comprises receiving image data corresponding to a view of a food item during a cooking process implemented by a cooking apparatus. The method further comprises identifying a region of interest in the view. The region of interest comprises an indication of liquid leached out from the food item as a result of the cooking process. The method further comprises determining a cooked level of the food item based on: a distribution of the liquid on a surface in the view; and a parameter value indicative of the cooked level of the food item. The parameter value is derived from a part of the image data that corresponds to the region of interest. The distribution of the liquid is indicated by a flow path of the liquid on the surface, and the region of interest comprises a location along the flow path.

Some embodiments related to the first and other aspects are now described.

In some embodiments, the distribution of the liquid on the surface is indicative of a volume of liquid leached out of the food item as a result of the cooking process. The volume of liquid leached out is indicative of the cooked level of the food item.

In some embodiments, the distribution of the liquid is indicated by an area of the liquid on the surface. The region of interest comprises at least part of the area.

In some embodiments, the location of the region of interest is selected based on a prediction of the flow path. The selected location is indicative of the cooked level of the food item.

In some embodiments, the method further comprises determining the distribution of the liquid on the surface by: identifying a part of the image data that is indicative of presence of the liquid; and determining the distribution based on a geometric measurement derived from the part of the image data.

In some embodiments, the cooked level of the food item is determined based on a model that indicates the cooked level based on the distribution.

In some embodiments, the method further comprises predicting an expected distribution of the liquid based on knowledge about the surface and/or historical data of a previously observed distribution of liquid on the surface. The method may further comprise designing the model to account for the expected distribution of liquid on the surface such that the model is to indicate the cooked level for the food item in response to the determined distribution following the expected distribution.

In some embodiments, the parameter value indicative of the cooked level of the food item is derived from pixel intensity data used to create the image data.

In some embodiments, the parameter value comprises a color value derived from the pixel intensity data for the region of interest and/or an intensity value derived from the pixel intensity data for the region of interest.

In some embodiments, the method further comprises comparing the image data with previously-obtained image data to determine the parameter value.

In some embodiments, the comparison of the image data with the previously-obtained image data indicates a change in intensity and/or color in the part of the image data corresponding to the region of interest. The parameter value is determined based on the change.

In some embodiments, the method further comprises determining the cooked level of the food item by comparing the parameter value with a threshold indicative of the cooked level.

In a second aspect, a non-transitory machine readable medium is described. The non-transitory machine readable medium stores instructions readable and executable by a processor to implement the cooking method of any one of the first aspect or related embodiments.

In a third aspect, a cooking apparatus is described. The cooking apparatus is for implementing a cooking process. The cooking apparatus comprises a cooking chamber for receiving a food item. The cooking apparatus further comprises a housing defining the cooking chamber. The cooking apparatus further comprises an air circulation system for circulating air flow inside the cooking chamber. The cooking apparatus further comprises a camera for capturing images during the cooking process. The cooking apparatus further comprises a controller. The controller is configured to implement the cooking method of the first aspect or related embodiments.

Certain aspects or embodiments described herein may provide various technical benefits as follows. Certain embodiments may allow the cooked level of a food item to be determined in a contact-free way (i.e., based on an analysis of image data). Certain embodiments may reduce the complexity of determining the cooked level of a food item (e.g., reduced compute resources may be deployed for determining the cooked level and/or a model used for determining the cooked level may not rely on complex methods such as artificial intelligence-based models). Certain embodiments may facilitate analysis of the cooked level on a consumer device (e.g., a cooking apparatus) that has compute resource constraints in terms of memory and/or processing resource (e.g., due to the relative simplicity of the method implemented by the consumer device). Certain embodiments may reduce user intervention during the cooking process (e.g., since the user may not need to do anything during the cooking process), facilitating an automatic cooking process that accommodates variations in terms user skill, recipe used, environment, cooking apparatus used, etc. Certain embodiments may provide an indication of a difficult-to-assess cooked level parameter such as juiciness or tenderness.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
Figure 1 refers to a cooking method according to an embodiment;
Figure 2 is a schematic drawing of a cooking ecosystem according to an embodiment;
Figure 3 is a schematic drawing of a cooking apparatus for implementing a cooking process according to an embodiment;
Figures 4(a)-(c) schematically depict example images of a food item during a cooking process and Figure 4(d) schematically depicts liquid leached out from the food item as depicted by Figure 4(c) according to an embodiment;
Figure 5 refers to a cooking method according to an embodiment;
Figures 6(a)-(b) are graphs representative of experimental data collected during a cooking process implemented according to various embodiments;
Figure 7 refers to a cooking method according to an embodiment;
Figures 8(a)-(d) schematically depict example images of a food item during a cooking process according to an embodiment;
Figure 9 refers to a cooking method according to various embodiments;
Figure 10 is a schematic drawing of a machine-readable medium for implementing various embodiments; and
Figure 11 is a schematic drawing of apparatus for implementing various embodiments.

### DETAILED DESCRIPTION OF THE EMBODIMENTS

As referred to herein, a "cooking process" refers to applying heat to a food item to cause a change in the food item. Such application of heat may result in a mere warming of the food item, or a more substantial change in the food item such as may be achieved by using cooking methods such as roasting, grilling, frying, air frying, etc.

As referred to herein, a "cooking apparatus" refers to any device capable of applying heat to a food item, in order to complete the cooking process as referred to above. Heat may be applied to the food item by the cooking apparatus in one or multiple ways such as by conduction, convection or radiation. Examples of cooking apparatus include: an oven, microwave oven, hob, air fryer, etc.

As referred to herein, a "cooked level" refers to a (e.g., at least one) parameter indicative of how well cooked a food item is as a result of the cooking process. The parameter may include a core temperature, surface temperature, juiciness, tenderness, color (e.g., a degree of browning) etc., of the food item. Thus, any number or combination of these parameters may indicate the cooked level of the food item.

A camera may be used to acquire images of a food item during a cooking process. Thus, a consumer may be able to view a video feed of the cooking process in real-time or save a video of the cooking process. During the cooking process, there may be various visual changes to food, such as surface color change, liquid leach-out, meat size change, etc. These visual changes may be detected in the images acquired during the cooking process.

Normally, meat is made up of 70-80 % water. The cooking process causes meat muscle to shrink, which causes water and other chemical components (e.g., fat, proteins, etc.) to leach out of the meat. Thus, the cooked level of the meat may be proportional to the amount of liquid leached out of the meat. Further, the amount of liquid leached out of the meat may be indicative of the juiciness of the meat. For example, if too much liquid leaches out, the meat may become hard and dry. Since collagen of meat breaks down (e.g., melts) at about 70 °C, water and other components trapped by the collagen are released from the meat at an increasing rate as the temperature increases during the cooking process. Since the core of the meat usually takes the longest to reach this temperature during the cooking process, the rate of liquid leached out as a result of the cooking process may increase when the surface of the meat reaches 70 °C and this increased rate of liquid leached out may continue at least for a while after the core of the meat also reaches 70 °C (during which time the surface of the meat may become dry and/or brown). Therefore, liquid leach out is a potentially good indicator of the cooked level of meat and other foods that may also leach out liquid such as certain meat substitutes and certain vegetables.

Certain embodiments described herein may provide an improved way to determine the cooked level of a food item.

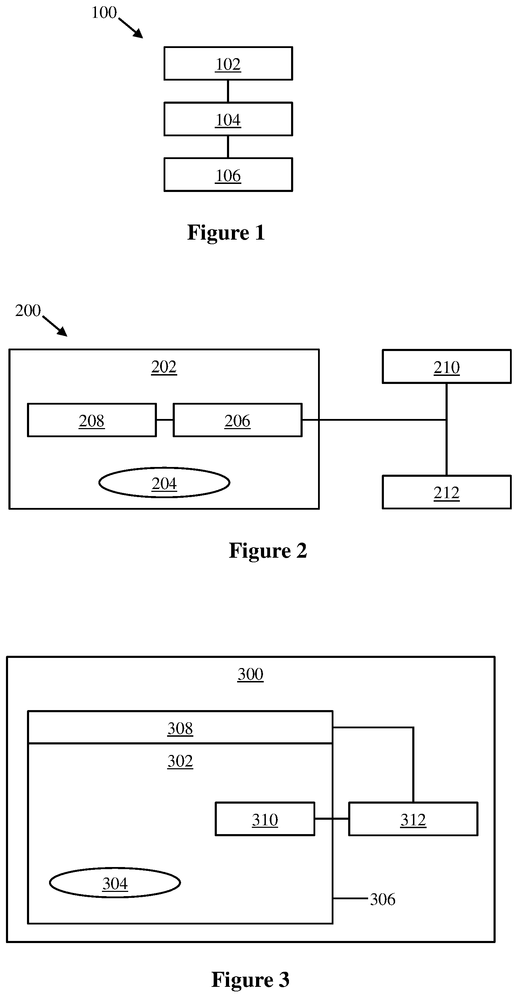

Figure 1 refers to a cooking method 100 according to an embodiment. The cooking method 100 may be computer-implemented e.g., by a processor of a cooking apparatus, as described in more detail below. Image data may be obtained by a camera during the cooking process.

The cooking method 100 comprises, at block 102, receiving image data corresponding to a view of a food item during a cooking process implemented by a cooking apparatus.

In some cases, the image data may refer to (e.g., raw) imaging data acquired by the camera. In some cases, the image data may have been processed after being acquired by the camera. In either case, the image data may refer to any data that may represent at least part of the view of the food item. The image data may be in any appropriate image format depending on any processing that takes place prior to receipt of the image data for implementing the cooking method 100. For example, the image data may comprise pixel intensity data (e.g., pixel intensity values for each color channel). The color channel may be based on any appropriate color model. For example, the color model may comprise the red-green-blue (RGB) color model, the hue-saturation-value (HSV) color model, etc.

The cooking method 100 further comprises, at block 104, identifying a region of interest in the view. The region of interest comprises an indication of liquid leached out from the food item as a result of the cooking process.

The region of interest in the view may correspond to a certain part of the image data (e.g., pixel intensity data) in which the presence of liquid leach-out is detectable (e.g., via analysis of the image data, as described below). In some cases, the region of interest may comprise a part of a surface upon which liquid leach-out is detectable. The surface may support the food item during the cooking process. Thus, any liquid leach-out that runs on to the surface may be detectable via a change in appearance of that surface (e.g., a change in color, reflectance, etc.) as a result of the liquid leach-out covering the surface. The liquid leach-out may itself change color during the cooking process (e.g., it may become more browned as time progresses). Thus, certain changes in appearance on the surface may be indicative of the presence of liquid that has leached out from the food item.

In some cases, the region of interest may comprise the entire area of the leach-out liquid. In some cases, the region of interest may comprise or correspond to a portion (or fraction) of the entire area of the leach-out liquid leach. Identifying the region of interest may comprise identifying such an area or portion of the area of the leach-out liquid. Image analysis may be used to identify the region of interest, e.g., based on an observed change in the image data acquired at different times of the cooking process. For example, the pixel intensity data may change as a result of the cooking process. A comparison of the pixel intensity data acquired at different times during the cooking process may be made in order to identify any change in the pixel intensity data that is indicative of the presence of leach-out liquid. In some cases, any such identification of the region of interest may comprise identifying the part of the image data (e.g., relevant pixels) that correspond to (e.g., map to) the region of interest in the view.

The cooking method 100 further comprises, at block 106, determining a cooked level of the food item based on a distribution of the liquid on a surface in the view and a parameter value indicative of the cooked level of the food item. The parameter value is derived from a part of the image data that corresponds to the region of interest.

In some embodiments, the parameter value indicative of the cooked level of the food item is derived from pixel intensity data used to create the image data.

In some embodiments, the parameter value comprises a color value (such as hue) derived from the pixel intensity data for the region of interest.

In some embodiments, the parameter value comprises an intensity value derived from the pixel intensity data for the region of interest.

During the cooking process, the leach-out liquid may flow over a surface visible in the view (e.g., a surface such as a baking tray upon which the food item is supported during the cooking process). The appearance of the surface may change as the leach-out liquid flows over the surface. The appearance of the surface may further change during the cooking process as the leach-out liquid itself is cooked (e.g., the liquid may become baked on to the surface).

In some cases, as the cooking process progresses, the total area of the leach-out liquid on the surface may increase. An increase in the total area of leach-out liquid may be indicative of the cooked level of the food item.

In some cases, the appearance of the surface (e.g., color, reflectance, etc.) may change as the cooking process progresses. The appearance may be represented by the parameter value. For example, leach-out liquid present on the surface may change a parameter value such as reflectance (e.g., spectral reflectance) of the surface. In some cases, this change in parameter value may be measured via the image data (e.g., pixel intensity data) for the part of the image data that corresponds to the surface (e.g., the region of interest). For example, the pixel intensity data for a color channel (or another measurement for color such as hue under the HSV color model) may change by a certain value during the cooking process. Thus, certain changes in the appearance of the surface visible in the view may be represented by a change in the parameter value. Such a change in parameter value may be indicative of the cooked level of the food item.

Thus, a change in the distribution of the leach-out liquid (e.g., a change in size, shape, etc.) on the surface may be indicative of the cooked level of the food item. Further, a change in the parameter value derived from the part of the image data corresponding to the region of interest may be indicative of the cooked level of the food item. Such changes may be detected during the cooking process and quantified. Based on such changes, the cooked level may be determined. In some cases, the cooked level may be determined based on a model that indicates the cooked level for a specified change such as a change in distribution of the leach-out liquid and/or a change in parameter value derived from the part of the image data corresponding to the region of interest. In some cases, the model may specify a threshold value for the liquid distribution and/or change in parameter value that is indicative of a certain cooked level.

Method 100 and certain other embodiments described herein may provide certain technical benefits such as described below.

Certain embodiments may allow the cooked level of a food item to be determined in a contact-free way (i.e., based on an analysis of image data). Certain embodiments may reduce the complexity of determining the cooked level of a food item (e.g., reduced compute resources may be deployed for determining the cooked level and/or a model used for determining the cooked level may not rely on complex methods such as artificial intelligence-based models). Certain embodiments may facilitate analysis of the cooked level on a consumer device (e.g., a cooking apparatus) that has compute resource constraints in terms of memory and/or processing resource (e.g., due to the relative simplicity of the method implemented by the consumer device). Certain embodiments may reduce user intervention during the cooking process (e.g., since the user may not need to do anything during the cooking process), facilitating an automatic cooking process that accommodates variations in terms user skill, recipe used, environment, cooking apparatus used, etc. Certain embodiments may provide an indication of a difficult-to-assess cooked level parameter such as juiciness or tenderness.

Figure 2 is a schematic drawing of a cooking ecosystem 200 according to an embodiment. Certain embodiments described herein (e.g., cooking method 100) may be implemented in certain parts of the cooking ecosystem 200. The cooking ecosystem 200 depicts various devices and entities which may be deployed as part of the cooking ecosystem 200. Not every device or entity depicted may be needed in some scenarios, as explained below.

The cooking ecosystem 200 comprises a cooking apparatus 202 for cooking a food item 204. The cooking apparatus 202 comprises a controller 206 for controlling the cooking process. For example, the controller 206 may control a heating element (not shown) of the cooking apparatus 202 (e.g., to control the cooking temperature of the cooking apparatus 202). The controller 206 is communicatively coupled to a camera 208 for capturing images. The camera 208 is positioned such that a region of interest associated with the food item 204 is within a field of view of the camera 208. This particular configuration is an example. For example, the camera 208 may or may not be inside the cooking apparatus 202 but may still have the food item 204 within its field of view, even if the camera 208 is external to the cooking apparatus 202.

In some cases, the cooking ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the cooking apparatus 202.

In some cases, the cooking ecosystem 200 comprises a user equipment 212 communicatively coupled to the controller 206. A user equipment 212 may refer to any computing device associated with a user (e.g., of the cooking apparatus 202). Examples of user equipment 212 include: a smartphone, smartwatch, tablet, Internet of Things (IoT) device, etc. In some cases, the user equipment 212 may be communicatively coupled to the cloud computing service 210.

Any one or combination of the controller 206, cloud computing service 210 and the user equipment 212 may be used to implement the cooking method 100 and other embodiments described herein. For example, in some cases, the controller 206 may implement the cooking method 100 and related embodiments. In this regard, the controller 206 may comprise a processor (not shown) for implementing the cooking method 100 and related embodiments. In other cases, processing circuitry associated with the various devices and entities of the cooking ecosystem 200 may implement the cooking method 100 and related embodiments.

Figure 3 is a schematic drawing of a cooking apparatus 300 for implementing a cooking process according to an embodiment. The cooking apparatus 300 may implement the functionality of certain embodiments described herein such as described in relation to the cooking method 100 of Figure 1. Certain features of the cooking apparatus 300 may correspond to or have similar functionality to features of the cooking apparatus 202 of Figure 2.

The cooking apparatus 300 comprises a cooking chamber 302 for receiving a food item 304. The cooking apparatus 300 further comprises a housing 306 defining the cooking chamber 302. The cooking apparatus 300 further comprises an air circulation system 308 for circulating air flow inside the cooking chamber 302. Therefore, in this regard, the cooking apparatus 300 may have a similar form to a fan oven or an air fryer. The cooking apparatus 300 further comprises a camera 310 for capturing images (of the view associated with the food item 304) during the cooking process. The captured images may correspond to or be used to derive the first and second image data.

The cooking apparatus 300 further comprises a controller 312 such as corresponding to the controller 206 of Figure 2. In this embodiment, the controller 312 is configured to implement the cooking method 100.

Thus, in this embodiment, the controller 312 is configured to: receive image data corresponding to a view of a food item during a cooking process implemented by a cooking apparatus; identify a region of interest in the view, wherein the region of interest comprises an indication of liquid leached out from the food item as a result of the cooking process; and determine a cooked level of the food item based on: a distribution of the liquid on a surface in the view; and a parameter value indicative of the cooked level of the food item, wherein the parameter value is derived from a part of the image data that corresponds to the region of interest.

Although Figure 3 describes that the controller 312 of the cooking apparatus 300 implements the cooking method 100, in some cases, other devices or entities (such as depicted by Figure 2) may implement at least some of the functionality of the cooking method 100 (and related embodiments).

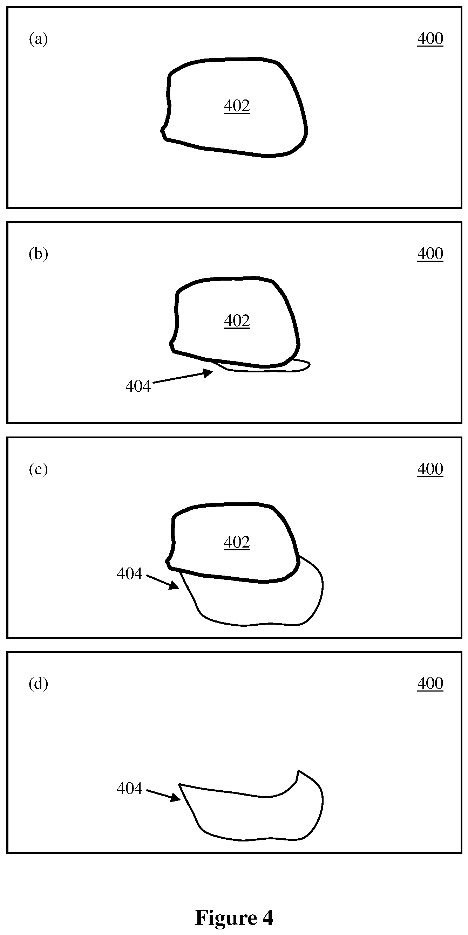

Figures 4(a)-(c) schematically depict example images 400 of an example food item 402 successively acquired during a cooking process (i.e., each image depicts a "view" of the food item 402) at the first, second and third times of the cooking process, respectively. Figure 4(d) depicts only the liquid leached out of the food item 402 at the third time (i.e., the leach-out liquid has been segmented from the food item 402 and the background).

As time progresses during the cooking process, the area of the leach-out liquid 404 on the surface around the food item 402 increases. In Figure 4(a), which represents the start of the cooking process, there is no liquid leached out from the food item 402. In Figure 4(b), at a later time of the cooking process, it is observed that leach-out liquid 404 has flowed on the surface around the food item 402. In Figure 4(c), at a later time of the cooking process, even more leach-out liquid 404 is observed on the surface. By comparing the area of the leached-out liquid 404 in Figures 4(b) and 4(c), it can be recognized that the food item 402 is more cooked in Figure 4(c) compared with Figure 4(b). As also shown by Figures 4(a)-(c), the food item 402 shrinks as the cooking process progresses.

Figure 4(d) shows the leached-out liquid 404 with the food item 402 and any other background objects removed from the view. Certain embodiments described herein refer to image processing methods for removing the food item 402 and any other background objects from the view. Such image processing methods may allow analysis of the leach-out liquid only without being affected by other objects.

Figures 4(a)-(c) depict how the distribution of the leach-out liquid 404 changes during the cooking process. The change in this distribution of the leached-out liquid 404 (e.g., by determining a dimension or area of the liquid 404 at different times of the cooking process) may be quantified. The cooked level may be determined based on a model that indicates the cooked level for a certain distribution of the liquid 404.

In some cases, the area of the liquid 404 may map to a set of pixels (or area/spatial region) within the image data. The number of pixels in the set/area may map to the actual area of the liquid 404 as visible in the view. Thus, the number of pixels that map to the liquid 404 in the view may be indicative of the cooked level.

In some cases, the area of the liquid 404 may be represented by the distance that the liquid 404 flows from the food item 402 (e.g., via a flow path such as a channel within the surface) and/or a depth of the liquid 404 that pools in a certain location on or adjacent to the surface. The distance and/or height reached by the liquid 404 may be proportional to the area of the liquid 404 (since more liquid leached out means that the distance and/or height reached may increase). Any pixels that map to a part of the view that is indicative of the flow distance and/or depth of the liquid 404 may be used to indicate the cooked level. In other words, the volume of liquid leached out from the food item 402 may be indicative of the cooked level of the food item. Thus, by determining the distribution (e.g., area, height or other dimension) of this volume of liquid that has flowed over the surface, it may be possible to determine the cooked level of the food item.

For example, if the liquid 404 flows to a certain location in the view, then a pixel that maps to the location may record a change in parameter value. The change in parameter value may be indicative of the presence of liquid 404.

In another example, if the liquid 404 pools in a certain location and reaches a certain depth, a pixel that maps to the certain depth may record a change in parameter value. The change in parameter value may again be indicative of the presence of leached-out liquid 404.

Accordingly, in some embodiments, the distribution of the liquid on the surface (e.g., of the baking tray supporting the food item) is indicative of a volume of liquid leached out of the food item as a result of the cooking process. The volume of liquid leached out is indicative of the cooked level of the food item.

In some embodiments, the distribution of the liquid is indicated by an area of the liquid on the surface. The region of interest comprises at least part of the area.

The distribution is indicated by a flow path of the liquid on the surface. The region of interest comprises a location along the flow path.

The cooking method 100 and other embodiments described herein may be combined with other methods for determining the cooked level of a food item 402. For example, computer vision may be used to detect a color change on the surface of the food item 402 itself. In another example, a temperature probe may be used to measure the core temperature of the food item 402. In another example, a smart detection method such as computer vision may be used to detect the amount of food. More food may mean more cooking time is needed. Thus, the cooking process may be modified to account for the amount of food. In another example, the starting temperature of the food item may be known (e.g., based on the initial food storage status such as whether the food is chilled, frozen etc.). Thus, the cooking process may be modified to account for the starting temperature. In some cases, the cooked level determination may be used to signal to a consumer and/or the cooking apparatus to modify the cooking process such as deciding how to end the cooking process (e.g., according to the user's preference and/or a recipe for the food item 402 being cooked). Deciding how to end the cooking process may comprise deciding actions such as turning off the cooking apparatus, specifying a cooking temperature prior to turning off, etc.

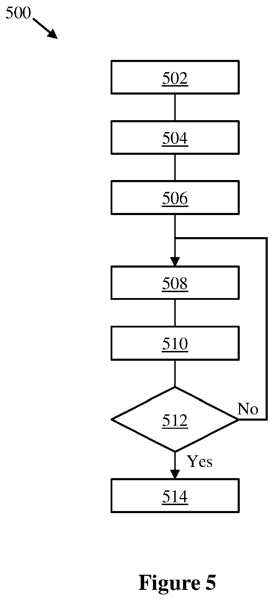

Figure 5 refers to a cooking method 500 according to an embodiment. The cooking method 500 may be computer-implemented e.g., by a processor of a cooking apparatus, as described above. The cooking method 500 may determine the distribution (e.g., area) of the leached-out liquid during the cooking process. A change in the distribution may be quantified. This quantification may be used to inform decision making on modifying the cooking process. The cooking method 500 may implement at least part of the cooking method 100, as described in more detail below. The blocks of the method 500 are now described. Some blocks may be omitted from the method 500 and/or implemented in a different order to that depicted by Figure 5.

At block 502 of the method 500, the food item is segmented from the background in the view represented by the image data. Segmentation may be performed using machine-learning (ML) or non-ML techniques. ML-based segmentation is well known to those of skill in the art of ML-based computer vision technologies. Non-ML techniques may comprise identifying boundaries in the image data by detecting abrupt changes in pixel intensity values within the image data. For example, a sudden change in pixel intensity value (e.g., above a predefined threshold) between adjacent pixels may indicate a boundary (e.g., perimeter) of a food item. Thus, some non-ML techniques for segmentation may identify a boundary within a view based on identifying the pixel locations associated with an abrupt change in pixel intensity (e.g., above a predefined threshold).

At block 504 of the method 500, the food information is identified. Information identified may comprise the type, amount (e.g., weight, dimensions, etc.), storage status (e.g., chilled, frozen, etc.) and/or the taste preference (e.g., the user's preference for how well cooked the food item is to be such as rare, medium or well done). The food information may be identified from user input via a user interface (associated with a user device and/or the cooking apparatus) and/or automatically. For example, where food information is automatically identified, image data may be processed to determine the food type based on an object recognition method such as implemented by using an ML-based technique such as object detection.

At block 506 of the method 500, a threshold is identified for determining when the food item is cooked to the user's preference. In some cases, the threshold may comprise an indication of mass loss associated with cooking the food item. Food such as meat may lose mass during the cooking process. Some of this lost mass may be leach-out liquid on the surface. Thus, by determining the distribution of the leach-out liquid on the surface, it may be possible to determine how well cooked the food item is since more liquid on the surface is indicative of lost mass (and hence the food item is more cooked). In some cases, the threshold may be a threshold area and/or number of pixels corresponding to the leach-out liquid on the surface in the view. In some cases, the threshold may be a threshold flow rate (e.g., speed, distance flowed, etc.) of the leach-out liquid. At the start of the cooking process, the flow rate of the leach-out liquid may increase. However, this flow rate may decrease towards the end of the cooking process. The threshold could be based on an indicator of the flow rate of the leach-out liquid (e.g., going above or below a threshold may indicate the cooked level of the food item, depending on the stage of the cooking process). In other words, there may be more than one threshold defined for the different stages of the cooking process.

At block 508 of the method 500, the leach-out liquid is segmented from the background. Block 508 may implement segmentation in a similar way as described in relation to block 502. In some cases, block 508 may comprise block 102 of the method 100. For example, the identified region of interest may correspond to the area of the leach-out liquid.

At block 510, the area of the leach-out liquid and/or liquid flow rate is determined. For example, the number of pixels in the image data corresponding to the area may be counted. In another example, the liquid flow rate may be determined by detecting an edge of the liquid leach-out and tracking movement of the edge of the liquid during the cooking process. In another example, the liquid flow rate may be determined by detecting when an edge of the liquid leach-out reaches a predefined location in the view. There may be multiple predefined locations. Thus, as the liquid flows to each successive location, the liquid flow rate can be determined.

At block 512, the area of the leach-out liquid and/or liquid flow rate is compared with the threshold (e.g., the threshold area and/or threshold flow rate). If the threshold is not reached, the method 500 proceeds again to block 508 (where image data acquired at a later time of the cooking process is analyzed according to blocks 510 to 512. If the threshold is reached, the method 500 proceeds to block 514 where a decision is made on how to proceed with the cooking process (e.g., ending the cooking process, reducing the temperature, etc.).

Roasting steak is used as an example to illustrate the cooking method 500 in which the distribution of the leached-out liquid is determined. Steak leaches out liquid during roasting. Experiments were carried out to monitor the cooked level of the steak during the cooking process that implements the cooking method 500.

In some cases, the food type (i.e., steak) is identified at the beginning or during the cooking process. In some cases, the relevant information may be acquired by user input or by computer vision technology. If by computer vision technology, food and background segmentation may be used in order to determine the food type.

In the experiment, 200g of chilled steak was cooked to a level that is considered well-done. Some thresholds for the amount (i.e., area) of leach-out liquid observable on the surface were identified that correspond to various cooked levels (indicated as level 1, level 2 and level 3 where level 2 is well-done). As described in more detail below, the area of the leach-out liquid can be determined based on the number of pixels of the image data that correspond to the leach-out liquid.

In the case of 200g of steak, cooked level 1 (e.g., undercooked) corresponds to 40k (thousand) pixels, cooked level 2 (e.g., well cooked) corresponds to 80k pixels and cooked level 3 (e.g., overcooked) corresponds to 100k pixels.

In the case of 200g of chicken breast, cooked level 1 (e.g., undercooked) corresponds to 85k pixels and cooked level 2 (e.g., well done) corresponds to 110k pixels.

It shall be appreciated that the threshold number of pixels depends on the system set-up so these example values are given to provide indications for ease of understanding. The thresholds were observed for different cooked levels using the indicated amounts of the different meat types.

The examples given above indicate the threshold number of pixels (that map to the area of the leach-out liquid on the surface). As the cooking process progresses, the number of pixels that map to the area of the leach-out liquid may increase. However, the rate of this increase may change. As the cooking process completes, the rate of area change may decrease (as there is less liquid to leach out from the food item over time). Thus, the threshold could specify a maximum change in the number of pixels over a specified period of time. For example, the area of the leach-out liquid could be determined periodically (e.g., every 2 minutes) and the threshold may have a predefined value such as 10k pixels. Thus, when the area change in a 2 minute period is less than 10k pixels (after previously exceeding 10k pixels in a previous 2 minute period), this may indicate that the cooking process is complete or nearing completion.

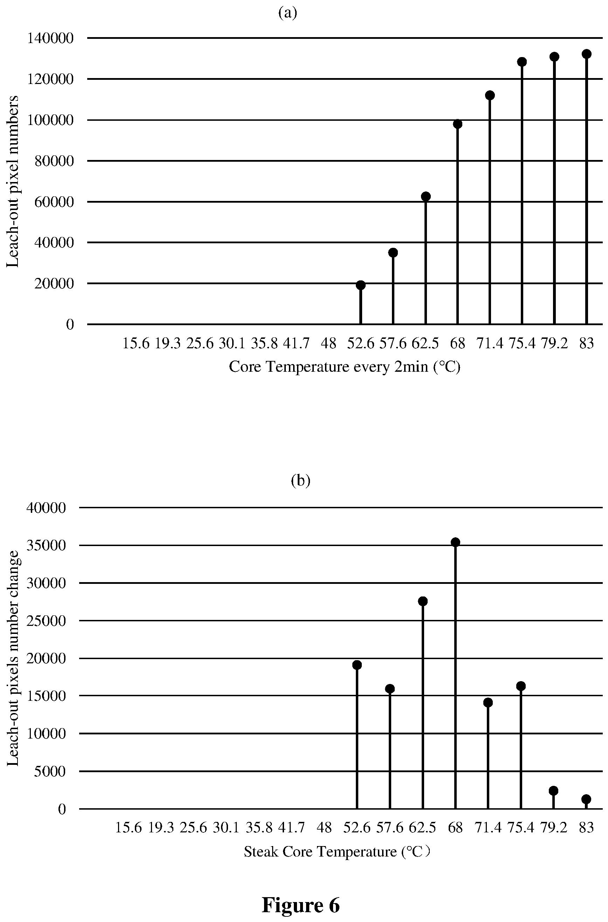

Figures 6(a)-(b) are graphs representative of steak cooking experimental data collected during a cooking process implemented according to various embodiments. Figure 6(a) depicts the relationship between the number of pixels in the image data that corresponds to the area of the leach-out liquid and the core temperature of steak. The core temperature is measured every 2 minutes. Initially, for the first 12 minutes, there is no leach-out liquid detected (or the amount detected is insignificant on the y-axis scale). The amount of leach-out liquid detected increases from 14 minutes onwards. The number of pixels in the image data that map to the leach-out liquid increases as the core temperature increases. However, the rate of change of pixel number varies throughout the cooking process, as depicted by Figure 6(b). Figure 6(b) depicts the change in the number of pixels every 2 minutes for the corresponding core temperature. Once the leach-out liquid is detected, the change rate is large. After the core temperature reaches 68 °C, the rate of change decreases due to less liquid leaching out. This decrease in the rate of change may be indicative of the food item being cooked or almost cooked. In some cases, this decrease in the rate of change of pixel number may be identified and used to determine the cooked level.

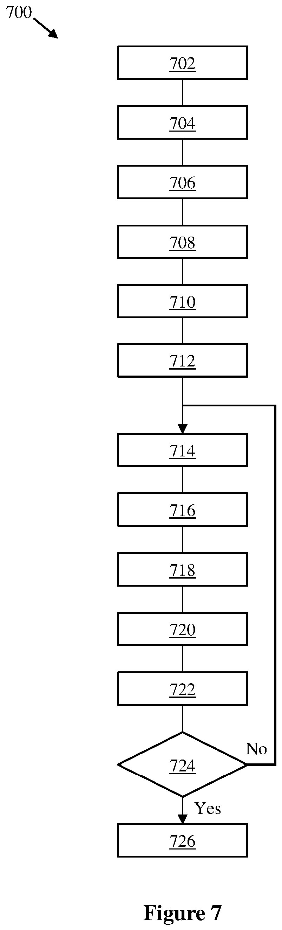

Figure 7 refers to a cooking method 700 according to an embodiment. The cooking method 700 may be computer-implemented e.g., by a processor of a cooking apparatus, as described above. The cooking method 700 may determine the distribution (e.g., area) of the leached-out liquid during the cooking process.

Previously described embodiments refer to the determination of the distribution of the leach-out liquid. Block 106 of the cooking method 100 refers to determining a cooked level of a food item based on such a distribution. Block 106 of the method 100 also refers to determining the cooked level based on a parameter value derived from a part of the image data that corresponds to the region of interest. As noted previously, the region of interest could be the entire area of the leach-out liquid or a certain portion of the area. The cooking method 700 refers to determining the distribution of the leach-out liquid, as well as determining the parameter value. Upon determining the distribution and the parameter value, the cooked level may be determined in accordance with block 106 of the cooking method 100.

By way of example, the cooking method 700 refers to steak roasting although the principle may be applied to cooking other food types.

At block 702 of the method 700, an image (i.e., image data) of roasted steak is obtained in the first cooking period, such as at cooking time of 6 minutes. This first image is referred to as image F1. In the present example, at block 704, image F1 is determined to have no leach-out liquid yet. In another example, there may be some leach-out liquid visible in the image.

In the next part of the method 700, the meat is segmented from the background to generate a binary image, F4, as explained below.

At block 706 of the method 700, the image F1 is converted into the YUV color space (e.g., if the image F1 uses a different color space such as RGB) to form image F2. It may be easier to implement segmentation on an image that uses the YUV color space instead of the RGB color space.

At block 708 of the method 700, the meat in image F2 is segmented from the background to form image F3. The segmentation may be based on ML or non-ML techniques. In the present example, a non-ML technique of using a threshold to identify a boundary corresponding to the perimeter of the meat is used to segment the meat from the background. The use of a contrasting surface color may assist with the segmentation. For example, it may be relatively easy to segment a pink/brown object such as meat from a white surface based on the threshold.

At block 710 of the method 700, image F3 is converted to a binary (e.g., a black and white) image F4.

At block 712 of the method 700, the image F4 is processed to form image F5 by setting the pixels that correspond to the meat to have a pixel intensity value of 0 and background to value 1. In this manner, every time a new image is analyzed, any leach-out liquid may be apparent in the image F5 (i.e., the pixels with a value of 1 correspond to the area which may comprise leach-out liquid).

At block 714 of the method 700, the subsequent image is acquired by the camera. In some cases, the acquisition of the image may happen periodically e.g., every 1 or 2 minutes.

At block 716 of the method 700, the image is read. In this example, there is leach-out liquid at 13 minutes of cooking (the resulting image is now referred to as F13).

At block 718 of the method 700, image F13 is converted into the hue-saturation-value (HSV) color space (although a different color space may be used). Image F13 may show the meat as a different hue and/or saturation to the surrounding area. In some cases, the saturation channel (denoted F_S(13)) is extracted from image F13.

At block 720 of the method 700, the pixels in the image F_S(13) are multiplied by the corresponding pixels for image F5 (to segment the leach-out liquid from the meat). In this manner, the food area is filtered out and only the leach-out liquid is left, as depicted by Figure 4(d).

At block 722 of the method 700, the pixel data for image F_S(13) which have a pixel intensity value greater than a threshold of, for example, 25 are considered to correspond to the leach-out liquid. The (change in) pixel intensity value is an example of a parameter value that is indicative of the cooked level of the food item. The parameter value is derived from a part of the image data that corresponds to the region of interest.

At block 724 of the method 700, the resulting number of pixels which have a pixel intensity value that exceeds a predefined pixel intensity threshold is compared with a threshold number of pixels that is indicative of the distribution of the leach-out liquid. For example, if the determined number of pixels is greater than the threshold number (such as 80k pixels as in the previous example), the method 700 proceeds to block 726. At block 726, information indicative of the cooked level (such as an indication that the threshold has been reached) is sent to a controller (e.g., controller 206) to implement a recommended action for cooking the meat. Control actions may include suggesting that consumer stops the cooking process and/or control the heating temperature (decreasing or increasing). In some cases, the implementation of block 726 may lead to a control signal being sent to the controller of the cooking apparatus in order to implement a cooking action that is consistent with the determined cooked level.

Cooking method 700 may be used to determine the distribution of the leach-out liquid and derive the parameter value (e.g., the pixel intensity values) for the part of the image corresponding to the leach-out liquid. The distribution and the parameter value may be used to determine the cooked level. By comparing the parameter value (e.g., pixel intensity values) with a threshold parameter value (e.g., for each pixel), it may be possible to determine the cooked level. Further, by comparing a value for the distribution (such as a number of pixels that have a parameter value that meets or exceeds the threshold parameter value) with a threshold value such as a specified number of pixels, it may be possible to determine the cooked level. Thus, the area of the leach-out liquid may be indicative of the cooked level, providing the parameter value(s) derived from the area is above a threshold parameter value.

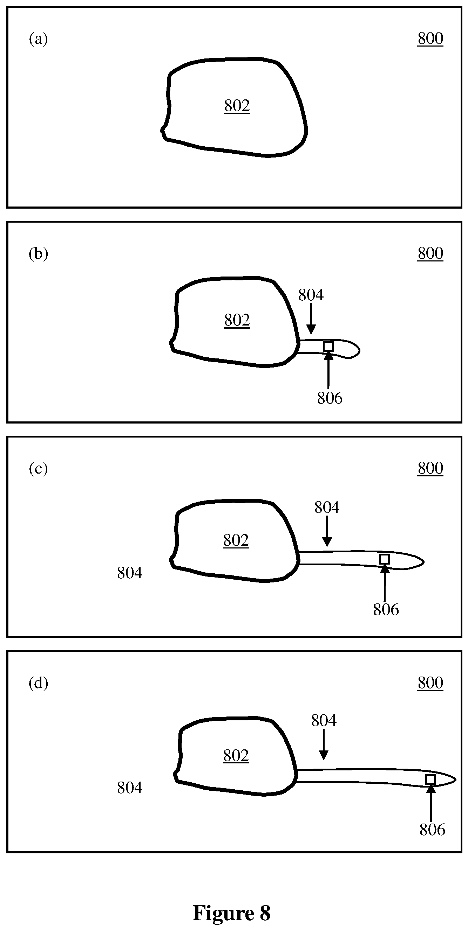

Figures 8(a)-(d) schematically depict example images 800 of a food item 802 during a cooking process according to an embodiment. Previously, the area of the leach-out liquid 804 is determined and used to determine the cooked level. However, in this embodiment, the area of the leach-out liquid 804 is not directly determined. Instead, the area of the leach-out liquid 804 is indicated by the distance traveled by the leach-out liquid as it flows on the surface (i.e., the further traveled, the more area is covered). A region of interest 806 is identified (as shown by Figures 8(b)-(d)) in the leach-out liquid 804. The location of the region of interest 806 is indicative of the cooked level of the food item 802 since the more liquid that leaches out, the more cooked the food item 802. If the path of the leach-out liquid 804 is known or predictable, detecting the leach-out liquid at certain locations may indicate the cooked level of the food item 802. In this regard, the location of the region of interest 806 is different in each of Figures 8(b)-(d). The parameter value (such as a pixel intensity value) is derived from the region of interest 806 and used to determine the cooked level. By comparing the parameter value with a threshold parameter value (which may be predefined), the cooked level of the food item can be determined.

In some cases, the surface may comprise a channel along which the leach-out liquid flows (such that the liquid likely only flows along that path). For example, the surface of a baking tray on which the food is supported may comprise a channel which directs the flow of the leach-out liquid. Pre-determined knowledge about such a channel may be used to allow the determination to be made regarding any change in the distribution of the leach-out liquid. In some cases, a location for the region of interest may be predetermined. The location may be selected to be within the channel. Knowledge about the distance between the food and the location (e.g., the length of the channel) may be used to determine the distribution. In other words, the location of the region of interest may be indicative of the cooked level of the food item based on the timing of when the leach-out liquid reaches the location during the cooking process.

Various designs for the surface may be used for providing a predictable flow path for the leach-out liquid. One example is to have a channel included in the surface that extends at least partially around the perimeter of the surface of the baking tray. A slope may be incorporated into the surface that directs the leach-out liquid towards a certain part of the channel such that each time the baking tray is used, the leach-out liquid follows the same path. Another example is to incorporate a chamber or pool within the baking tray to hold leach-out liquid. Locations within or around the chamber/pool could indicate the height of the leach-out liquid as it pools such that as the height increases, detecting leach-out liquid at one of such locations indicates the cooked level of the food item.

As noted previously, a region of interest may be identified at a location along the predicted flow path. In some cases, a plurality of regions of interest may be identified along the predicted flow path. As the leach-out liquid reaches each successive region of interest, this may indicate the cooked level of the food item since the further away the region of interest is from the food path (i.e., distance traveled by the leach-out liquid), the more cooked the food item is. In some cases, the parameter value derived from the region of interest is color (such as a hue value of the HSV color space). In some cases, the parameter value derived from the region of interest is saturation (e.g., according to the HSV color space). However, other parameter values may be derived from the image data for the region of interest. When leach-out liquid reaches the region of interest, there may be a change of parameter value. If the change of parameter value exceeds a threshold parameter value, this may indicate the cooked level of the food item. By way of example, a threshold parameter value may be a pixel intensity value change of 10. If the detected change is 10 or more, then this may indicate the cooked level of the food item. In some cases where there is a plurality of regions of interest, the cooked level may be determined based on the distribution (i.e., which regions of interest are detected as having leach-out liquid present) and the change in parameter value (i.e., the change in color and/or saturation in a particular region of interest). For example, there may be 5 regions of interest, labelled 1 to 5 where 5 is furthest away from the food item in terms of the distance of flow path. If the leach-out liquid reaches region of interest 5 and the parameter value change is above the threshold, this may indicate that the food item is overcooked. However, if the leach-out liquid reaches region of interest 3 and the parameter value change is above the threshold, this may indicate that the food item is cooked. Thus, the cooking process may need to be stopped upon the leach-out liquid reaching region of interest 3, for example. Other methodologies may include detecting when the leach-out liquid reaches all region of interest and monitoring the parameter value change. If a specified proportion (e.g., 3 out of 5) of the regions of interest exhibit a parameter value change above the threshold, this may indicate the food item is cooked.

The parameter value change may be different in each of the locations due to the distance along the flow path of the leach-out liquid (since the leach-out liquid may become baked on to the surface over time, thereby changing its color). By monitoring the parameter value change in at least one of these locations over time, it may be possible to determine the cooked level of the food item.

In some cases, the flow path of the leach-out liquid may be predicted based on historical information (e.g., prior use) and/or some other analysis of how leach-out liquid flows on the surface. A user may have different experiences of the flow path based on their particular set-up. For example, factors such as angle of inclination of the surface, type of baking surface, location of the food item on the surface, etc., may affect the likely flow path of leach-out liquid. Therefore, the flow path of the leach-out liquid may be predicted by performing a segmentation operation in a first use of the cooking apparatus in order to determine the flow path of the leach-out liquid when cooking a food item.

In some cases, certain features of the flow path that indicate a direction, a change of direction and/or size of the flow path may be identified based on an analysis of the flow path. A segmentation operation to determine the flow path may provide a contour representative of the distribution of the leach-out liquid on the surface. This distribution/contour of leach-out liquid may have certain features which can be used to predict the flow path (i.e., after the liquid flows past the feature). For example, a convex feature or concave feature in the surface may direct liquid in a predictable way along the surface since liquid may flow into a concave feature whereas liquid may flow around a convex feature. In another example, a corner of the flow path may indicate a change of direction. Thus, when liquid reaches the corner, the liquid is expected to flow in a different (and predictable) direction. In another example, the feature may be a start location or end location of the flow path. For example, the start location may be adjacent the food item. The end location may be a feature on the surface (such as a concave feature or a region that is at the bottom of a slope) where leach-out liquid pools. By identifying certain features of the flow path that indicate a direction, a change of direction and/or size of the flow path, a set of locations (e.g., coordinates or a pixel identity) that coincide with the flow path may be identified. A region of interest may comprise such a location. In an example, the set of locations may coincide with a centerline (e.g., the middle) of the flow path. As depicted by Figure 8(b)-(d), each region of interest 806 is approximately in the middle of the flow path of the liquid 804. Thus, in some cases, the center of the region of interest 806 may be aligned with the centerline of the flow path. Figure 8 shows a relatively straight flow path. In some cases, there may be turning point (e.g., corner) in the flow path. In some cases, a geometric analysis of the contour of the flow path may indicate the locations along the flow path that correspond to the centerline of the flow path. For example, x and y coordinates (e.g., pixel locations) at the respective ends of a straight section of a flow path may be obtained by the geometric analysis. A location for a region of interest may be selected along a line between the two respect ends. Thus, an analysis of the flow path in a first use of the cooking apparatus may be used to predict the flow path in a second use of the cooking apparatus. Once the flow path (i.e., distribution) is predicted, the cooked level may be determined in the second use based on the distribution and the parameter value (e.g., in accordance with the cooking method 100).

The segmented flow path may be saved (in a memory) such that in a second use of the cooking apparatus, the flow path of the leach-out liquid is predictable. The user or the controller may select a location for the region of interest for the second use of the cooking apparatus. Thus, once the leach-out liquid flow path is predicted, it may be possible to determine the cooked level of the food item in the second (or subsequent) use of the cooking apparatus based on the determined distribution and parameter value. Use of prediction based on historical information and/or other analysis may allow the user to use their own utensils (e.g., a baking tray) and/or account for variations in terms of the set-up/environment of the cooking apparatus. For example, the user interface of the cooking apparatus or another user equipment may allow the user to instruct the cooking apparatus to predict the leach-out liquid flow path for the user's utensils and/or set-up. Thus, the cooking level may be determined based on a distribution of leach-out liquid that is predicted for the user's utensils and/or set-up. Thus, the results of the implementing various methods described herein may be more personalized to the user. In some cases, the user may make adjustments to the predicted leach-out liquid flow path via the user interface e.g., if there is a deviation between the actual and predicted flow path.

Accordingly, in some embodiments, the location of the region of interest is selected based on a prediction of the flow path. The selected location is indicative of the cooked level of the food item.

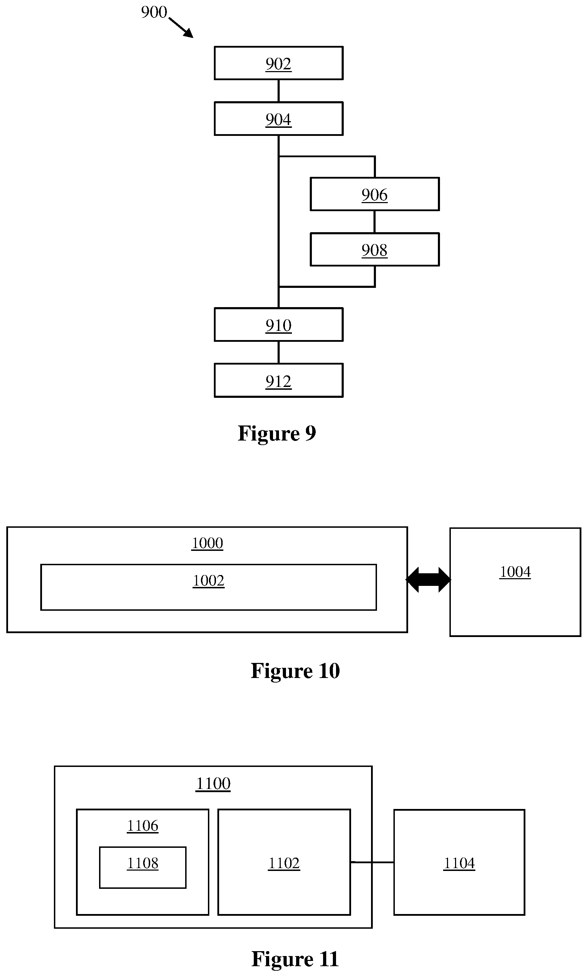

Figure 9 refers to a cooking method 900 according to various embodiments. The cooking method 900 may be computer-implemented e.g., by a processor of a cooking apparatus, as described above. The cooking method 900 may implement at least part of the cooking methods 100, 500, 700, as well as any other cooking methods described herein. The blocks of the method 900 are now described. Some blocks may be omitted from the method 900 and/or implemented in a different order to that depicted by Figure 9.

In some embodiments, the distribution of the liquid on the surface may be determined by: at block 902 of the method 900, identifying a part of the image data that is indicative of presence of the liquid; and, at block 904 of the method 900, determining the distribution based on a geometric measurement derived from the part of the image data.

In some cases, the geometric measurement could be any dimension such as length, width, area, etc., of the leach-out liquid. The leach-out liquid in the view may map to certain pixels of/locations within the image data. The number of pixels across at least one dimension or the total number of pixels that correspond to the leach-out liquid may be indicative of a geometric measurement of the leach-out liquid. In other words, the parts of the image data that map to the leach-out liquid may be indicative of the geometric measurement of the leach-out liquid. Thus, in some cases, the distribution of the leach-out liquid may be determined based on the pixels/locations within the image data which map to the leach-out liquid within the view.

In some embodiments, the cooked level of the food item is determined based on a model that indicates the cooked level based on the distribution. In some cases, the model may be predefined. In some cases, the model may specify a threshold number of pixels (or corresponding dimension or area within the image data) that indicates the cooked level of the food item (e.g., based on the food type). In some cases, the model may specify a (e.g., at least one) location for the region of interest (e.g., based on an expected flow path of the leach-out liquid such as when the user uses a specified baking tray incorporating a channel in its surface, or the like). In some cases, the model may specify a threshold parameter value (e.g., change in hue, saturation, etc.) that is indicative of the cooked level of the food item.

In some embodiments, the method 900 comprises, at block 906, predicting an expected distribution of the liquid based on knowledge about the surface and/or historical data of a previously observed distribution of liquid on the surface. The method 900 further comprises, at block 908, designing the model to account for the expected distribution of liquid on the surface such that the model is to indicate the cooked level for the food item in response to the determined distribution following the expected distribution.

Blocks 906 to 908 of the method 900 refer to making a prediction about how leach-out liquid is expected flow on the surface (e.g., if a new baking tray is used, the cooking apparatus is positioned on a slope, etc.) and then designing the model accordingly. Designing may mean "creating" a new model or "modifying" an existing model.

In some embodiments, the method 900 comprises, at block 910, comparing the image data with previously-obtained image data to determine the parameter value. For example, image data acquired at a first time of the cooking process may be compared with image data acquired at a second time of the cooking process. A change in a value such as a pixel intensity value (within an area of the image data that maps to the leach-out liquid) may be the determined parameter value.

In some embodiments, the comparison of the image data with the previously-obtained image data indicates a change in intensity and/or color in the part of the image data corresponding to the region of interest. The parameter value is determined based on the change.

In some embodiments, the method 900 comprises, at block 912, determining the cooked level of the food item by comparing the parameter value with a threshold indicative of the cooked level. The threshold may be predefined based on any one or number of factors such as food type, surface color (since the change in surface color may affect the observable parameter value), etc.

In some embodiments, the determined cooked level of the food item may be used to inform the cooking process. For example, once the cooked level of the food item reaches a predefined or preferred state (e.g., rare, medium-rare, medium, cooked, well done, etc.), the cooking process may be modified (e.g., by stopping the cooking process or by changing the cooking temperature).

Figure 10 is a schematic drawing of a non-transitory machine-readable medium 1000 for implementing various embodiments described herein. As used herein, the term "non-transitory" does not encompass transitory propagating signals. The machine-readable medium 1000 stores instructions 1002 readable and executable by a processor 1004 to implement the method of any of the embodiments described herein (e.g., cooking methods 100, 500, 700, 900 and/or related embodiments). The machine-readable medium 1000 and/or the processor 1004 may be implemented by any of the controller 206, cloud computing service 210, user equipment 212 and/or controller 312 of Figures 2 or 3.

Figure 11 is a schematic drawing of apparatus 1100 for implementing various embodiments described herein. The apparatus 1100 may be implemented by any of the controller 206, cloud computing service 210, user equipment 212 and/or controller 312 of Figures 2 or 3.

The apparatus 1100 comprises a processor 1102. The processor 1102 is configured to communicate with an interface 1104. The interface 1104 may be any interface (wireless or wired) implementing a communications protocol to facilitate exchange of data (e.g., image data, cooking apparatus control instructions, etc.) with other devices such as another part of the cooking ecosystem 200.

The apparatus 1100 further comprises a memory 1106 (e.g., non-transitory or otherwise) storing instructions 1108 readable and executable by the processor 1102 to implement various embodiments described herein (e.g., cooking methods 100, 500, 700, 900 or any of the associated embodiments).

Any of the models described herein may be implemented by the processing circuitry for implementing the cooking methods described herein. Thus, certain blocks of the cooking methods may involve use of such models in order to provide the stated functionality. The models may be machine learning (ML)-based or non-ML-based. However, certain embodiments described herein refer to use of non-ML-based models, which may avoid the need to use extensive compute resources and/or enable local processing.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (100) for cooking food , comprising:
receiving (102) image data corresponding to a view of a food item during a cooking process implemented by a cooking apparatus;
identifying (104) a region of interest in the view, wherein the region of interest comprises an indication of liquid leached out from the food item as a result of the cooking process; and
determining (106) a cooked level of the food item based on:
a distribution of the liquid on a surface in the view; and
a parameter value indicative of the cooked level of the food item, wherein the parameter value is derived from a part of the image data that corresponds to the region of interest;
**characterised in that** the distribution of the liquid is indicated by a flow path of the liquid on the surface, and wherein the region of interest comprises a location along the flow path.

2. The method (100) of claim 1, wherein the distribution of the liquid on the surface is indicative of a volume of liquid leached out of the food item as a result of the cooking process, and wherein the volume of liquid leached out is indicative of the cooked level of the food item.

3. The method (100) of any one of claims 1 to 2, wherein the distribution of the liquid is indicated by an area of the liquid on the surface, and wherein the region of interest comprises at least part of the area.

4. The method (100) of claim 1, wherein the location of the region of interest is selected based on a prediction of the flow path, wherein the selected location is indicative of the cooked level of the food item.

5. The method (900) of any one of claims 1 to 4, comprising determining the distribution of the liquid on the surface by:
identifying (902) a part of the image data that is indicative of presence of the liquid; and
determining (904) the distribution based on a geometric measurement derived from the part of the image data.

6. The method of any one of claims 1 to 5, wherein the cooked level of the food item is determined based on a model that indicates the cooked level based on the distribution.

7. The method (900) of claim 6, comprising:
predicting (906) an expected distribution of the liquid based on knowledge about the surface and/or historical data of a previously observed distribution of liquid on the surface; and
designing (908) the model to account for the expected distribution of liquid on the surface such that the model is to indicate the cooked level for the food item in response to the determined distribution following the expected distribution.

8. The method of any one of claims 1 to 7, wherein the parameter value indicative of the cooked level of the food item is derived from pixel intensity data used to create the image data.

9. The method of claim 8, wherein the parameter value comprises:
a color value derived from the pixel intensity data for the region of interest; and/or
an intensity value derived from the pixel intensity data for the region of interest.

10. The method (900) of any one of claims 1 to 9, comprising comparing (910) the image data with previously-obtained image data to determine the parameter value.

11. The method of claim 10, wherein the comparison of the image data with the previously-obtained image data indicates a change in intensity and/or color in the part of the image data corresponding to the region of interest, and wherein the parameter value is determined based on the change.

12. The method (900) of any one of claims 1 to 11, comprising determining (912) the cooked level of the food item by comparing the parameter value with a threshold indicative of the cooked level.

13. A non-transitory machine readable medium (1000) storing instructions (1002) readable and executable by a processor (1004) to implement the method of any one of claims 1 to 12.

14. A cooking apparatus (300) for implementing a cooking process, comprising:
a cooking chamber (302) for receiving a food item (304);
a housing (306) defining the cooking chamber;
an air circulation system (308) for circulating air flow inside the cooking chamber;
a camera (310) for capturing images during the cooking process; and
a controller (312) configured to:
receive (102) image data corresponding to a view of a food item during a cooking process implemented by a cooking apparatus;
identify (104) a region of interest in the view, wherein the region of interest comprises an indication of liquid leached out from the food item as a result of the cooking process; and
determine (106) a cooked level of the food item based on:
a distribution of the liquid on a surface in the view; and
a parameter value indicative of the cooked level of the food item,
wherein the parameter value is derived from a part of the image data that corresponds to the region of interest;
**characterised in that** the distribution of the liquid is indicated by a flow path of the liquid on the surface, and wherein the region of interest comprises a location along the flow path.

## Patentansprüche

1. Computerimplementiertes Verfahren (100) zum Kochen von Speisen, umfassend:
Empfangen (102) von Bilddaten, die einer Ansicht eines Lebensmittels während eines von einer Kocheinrichtung durchgeführten Kochvorgangs entsprechen;
Identifizieren (104) eines Interessenbereichs in der Ansicht, wobei der Interessenbereich eine Anzeige von Flüssigkeit umfasst, die aus dem Lebensmittel als Ergebnis des Kochvorgangs ausgelaugt wurde; und
Bestimmen (106) eines Gargrades des Lebensmittels auf der Grundlage:
einer Verteilung der Flüssigkeit auf einer Oberfläche in der Ansicht; und
eines Parameterwertes, der den Gargrad des Lebensmittels anzeigt, wobei der Parameterwert von einem Teil der Bilddaten abgeleitet wird, der dem Interessenbereich entspricht;
**dadurch gekennzeichnet, dass**
die Verteilung der Flüssigkeit durch einen Strömungsweg der Flüssigkeit auf der Oberfläche angezeigt wird, wobei der Interessenbereich einen Ort entlang des Strömungswegs umfasst.

2. Verfahren (100) nach Anspruch 1, wobei die Verteilung der Flüssigkeit auf der Oberfläche ein Volumen der Flüssigkeit anzeigt, die als Ergebnis des Kochprozesses aus dem Lebensmittel ausgelaugt wird, und wobei das Volumen der ausgelaugten Flüssigkeit den Gargrad des Lebensmittels anzeigt.

3. Verfahren (100) nach einem der Ansprüche 1 bis 2, wobei die Verteilung der Flüssigkeit durch einen Bereich der Flüssigkeit auf der Oberfläche angezeigt wird, und wobei der Interessenbereich zumindest einen Teil des Bereichs umfasst.

4. Verfahren (100) nach Anspruch 1, wobei der Ort des Interessenbereichs auf der Grundlage einer Vorhersage des Strömungswegs ausgewählt wird, wobei der ausgewählte Ort den Gargrad des Lebensmittels anzeigt.

5. Verfahren (900) nach einem der Ansprüche 1 bis 4, umfassend Bestimmen der Verteilung der Flüssigkeit auf der Oberfläche durch:
Identifizieren (902) eines Teils der Bilddaten, der das Vorhandensein der Flüssigkeit anzeigt; und
Bestimmen (904) der Verteilung auf der Grundlage einer geometrischen Messung, die von dem Teil der Bilddaten abgeleitet wurde.

6. Verfahren nach einem der Ansprüche 1 bis 5, wobei der Gargrad des Lebensmittels auf der Grundlage eines Modells bestimmt wird, das den Gargrad auf der Grundlage der Verteilung anzeigt.

7. Verfahren (900) nach Anspruch 6, umfassend:
Vorhersagen (906) einer erwarteten Verteilung der Flüssigkeit auf der Grundlage von Kenntnissen über die Oberfläche und/oder von historischen Daten einer zuvor beobachteten Verteilung von Flüssigkeit auf der Oberfläche; und
Entwerfen (908) des Modells, um die erwartete Verteilung der Flüssigkeit auf der Oberfläche zu berücksichtigen, sodass das Modell den Gargrad des Lebensmittels als Reaktion auf die bestimmte Verteilung entsprechend der erwarteten Verteilung anzeigt.

8. Verfahren nach einem der Ansprüche 1 bis 7, wobei der Parameterwert, der den Gargrad des Lebensmittels anzeigt, aus Pixelintensitätsdaten abgeleitet wird, die zum Erzeugen der Bilddaten verwendet wurden.

9. Verfahren nach Anspruch 8, wobei der Parameterwert umfasst:
einen aus den Pixelintensitätsdaten abgeleiteten Farbwert für den Interessenbereich; und/oder
einen aus den Pixelintensitätsdaten abgeleiteten Intensitätswert für den Interessenbereich.

10. Verfahren (900) nach einem der Ansprüche 1 bis 9, umfassend Vergleichen (910) der Bilddaten mit zuvor erhaltenen Bilddaten, um den Parameterwert zu bestimmen.

11. Verfahren nach Anspruch 10, wobei der Vergleich der Bilddaten mit den zuvor erhaltenen Bilddaten eine Änderung der Intensität und/oder Farbe in dem Teil der Bilddaten anzeigt, der dem Interessenbereich entspricht, und wobei der Parameterwert auf der Grundlage der Änderung bestimmt wird.

12. Verfahren (900) nach einem der Ansprüche 1 bis 11, umfassend Bestimmen (912) des Gargrades des Lebensmittels durch Vergleichen des Parameterwertes mit einem Schwellenwert, der den Gargrad anzeigt.

13. Nichtflüchtiges maschinenlesbares Medium (1000), das Anweisungen (1002) speichert, die von einem Prozessor (1004) gelesen und ausgeführt werden können, um das Verfahren nach einem der Ansprüche 1 bis 12 zu implementieren.

14. Kocheinrichtung (300) zum Durchführen eines Kochvorgangs, umfassend:
einen Garraum (302) zum Aufnehmen eines Lebensmittels (304);
ein Gehäuse (306), das den Garraum definiert;
ein Luftzirkulationssystem (308) zum Zirkulieren des Luftstroms innerhalb des Garraums;
eine Kamera (310) zum Aufnehmen von Bildern während des Kochvorgangs; und
eine Steuereinheit (312), die dazu konfiguriert ist:
Bilddaten zu empfangen (102), die einer Ansicht eines Lebensmittels während eines von einer Kocheinrichtung durchgeführten Kochvorgangs entsprechen;
einen Interessenbereich in der Ansicht zu identifizieren (104), wobei der Interessenbereich eine Anzeige von Flüssigkeit umfasst, die aus dem Lebensmittel als Ergebnis des Kochvorgangs ausgelaugt wurde; und
einen Gargrad des Lebensmittels zu bestimmen (106) auf der Grundlage:
einer Verteilung der Flüssigkeit auf einer Oberfläche in der Ansicht; und
eines Parameterwerts, der den Gargrad des Lebensmittels anzeigt,
wobei der Parameterwert von einem Teil der Bilddaten abgeleitet wird, der dem Interessenbereich entspricht;
**dadurch gekennzeichnet, dass**
die Verteilung der Flüssigkeit durch einen Strömungsweg der Flüssigkeit auf der Oberfläche angezeigt wird, wobei der Interessenbereich einen Ort entlang des Strömungswegs umfasst.

## Revendications

1. Procédé mis en œuvre par ordinateur (100) pour la cuisson d'aliments, comprenant :
la réception (102) de données d'image correspondant à une vue d'un aliment pendant un processus de cuisson mis en œuvre par un appareil de cuisson ;
l'identification (104) d'une région d'intérêt dans la vue, dans lequel la région d'intérêt comprend une indication de liquide dégagé par l'aliment à la suite du processus de cuisson ; et
la détermination (106) d'un niveau de cuisson de l'aliment sur la base de :
une distribution du liquide sur une surface dans la vue ; et
une valeur de paramètre indiquant le niveau de cuisson de l'aliment, dans lequel la valeur de paramètre est déduite d'une partie des données d'image qui correspond à la région d'intérêt ;
**caractérisé en ce que**
la distribution du liquide est indiquée par un trajet d'écoulement du liquide sur la surface et dans lequel la région d'intérêt comprend un emplacement le long du trajet d'écoulement.

2. Procédé (100) selon la revendication 1, dans lequel la distribution du liquide sur la surface indique un volume de liquide dégagé par l'aliment à la suite du processus de cuisson et dans lequel le volume de liquide dégagé indique le niveau de cuisson de l'aliment.

3. Procédé (100) selon l'une quelconque des revendications 1 à 2, dans lequel la distribution du liquide est indiquée par une zone du liquide sur la surface et dans lequel la région d'intérêt comprend au moins une partie de la zone.

4. Procédé (100) selon la revendication 1, dans lequel l'emplacement de la région d'intérêt est sélectionné sur la base d'une prédiction du trajet d'écoulement, dans lequel l'emplacement sélectionné indique le niveau de cuisson de l'aliment.

5. Procédé (900) selon l'une quelconque des revendications 1 à 4, comprenant la détermination de la distribution du liquide sur la surface par :
l'identification (902) d'une partie des données d'image qui indique la présence du liquide ; et
la détermination (904) de la distribution sur la base d'une mesure géométrique déduite de la partie des données d'image.

6. Procédé selon l'une quelconque des revendications 1 à 5, dans lequel le niveau de cuisson de l'aliment est déterminé sur la base d'un modèle qui indique le niveau de cuisson sur la base de la distribution.

7. Procédé (900) selon la revendication 6, comprenant :
la prédiction (906) d'une distribution attendue du liquide fondée sur des connaissance sur la surface et/ou des données historiques d'une distribution de liquide observée précédemment à la surface ; et
la conception (908) du modèle pour tenir compte de la distribution attendue du liquide sur la surface de telle sorte que le modèle est destiné à indiquer le niveau de cuisson de l'aliment en réponse à la distribution déterminée suivant la distribution attendue.

8. Procédé selon l'une quelconque des revendications 1 à 7, dans lequel la valeur de paramètre indiquant le niveau de cuisson de l'aliment est déduite de données d'intensité de pixels utilisées pour créer les données d'image.

9. Procédé selon la revendication 8, dans lequel la valeur de paramètre comprend :
une valeur de couleur déduite des données d'intensité de pixels pour la région d'intérêt ; et/ou
une valeur d'intensité déduite des données d'intensité de pixels pour la région d'intérêt.

10. Procédé (900) selon l'une quelconque des revendications 1 à 9, comprenant la comparaison (910) des données d'image avec des données d'image obtenues précédemment pour déterminer la valeur de paramètre.

11. Procédé selon la revendication 10, dans lequel la comparaison des données d'image avec les données d'image obtenues précédemment indique un changement d'intensité et/ou de couleur dans la partie des données d'image correspondant à la région d'intérêt, et dans lequel la valeur de paramètre est déterminée sur la base du changement.

12. Procédé (900) selon l'une quelconque des revendications 1 à 11, comprenant la détermination (912) du niveau de cuisson de l'aliment en comparant la valeur de paramètre à un seuil indiquant le niveau de cuisson.

13. Support non transitoire lisible par machine (1000) stockant des instructions (1002) lisibles et exécutables par un processeur (1004) pour mettre en œuvre le procédé selon l'une quelconque des revendications 1 à 12.

14. Appareil de cuisson (300) pour mettre en œuvre un processus de cuisson, comprenant :
une chambre de cuisson (302) pour recevoir un aliment (304) ;
un logement (306) définissant la chambre de cuisson ;
un système de circulation d'air (308) pour faire circuler un flux d'air à l'intérieur de la chambre de cuisson ;
une caméra (310) pour capturer des images pendant le processus de cuisson ; et
un dispositif de commande (312) configuré pour :
recevoir (102) des données d'image correspondant à une vue d'un aliment pendant un processus de cuisson mis en œuvre par un appareil de cuisson ;
identifier (104) une région d'intérêt dans la vue, dans lequel la région d'intérêt comprend une indication de liquide dégagé par l'aliment à la suite du processus de cuisson ; et
déterminer (106) un niveau de cuisson de l'aliment sur la base de :
une distribution du liquide sur une surface dans la vue ; et
une valeur de paramètre indiquant le niveau de cuisson de l'aliment,
dans lequel la valeur de paramètre est déduite d'une partie des données d'image qui correspond à la région d'intérêt ;
**caractérisé en ce que**
la distribution du liquide est indiquée par un trajet d'écoulement du liquide sur la surface, et dans lequel la région d'intérêt comprend un emplacement le long du trajet d'écoulement.
